# EUROPÄISCHE PATENTANMELDUNG

(11) **EP 3 981 691 A1**
(43) Veröffentlichungstag der Anmeldung: **13.04.2022**
(21) Anmeldenummer: 21200510.2
(22) Anmeldetag: 01.10.2021
(51) Int. Cl.: B64G 1/00, B64G 1/62, B64G 1/64, B64G 1/14

(54) **TRÄGERRAKETENSYSTEM MIT TRÄGERRAKETE UND STARTHILFEEINHEIT**

(30) Priorität: 09.10.2020 DE 102020126575
(71) Anmelder: ArianeGroup GmbH, 82024 Taufkirchen (DE)
(72) Erfinder: Stockfleth, Holger, 28199 Bremen (DE)
(74) Vertreter: Marschall, Stefan

(57) **Zusammenfassung**

Offenbart ist ein Trägerraketensystem 1 mit einer Trägerrakete 100 sowie mit einer Starthilfeeinheit 200, die mit der Trägerrakete 100 lösbar verbunden oder zu verbinden ist. Das Trägerraketensystem 1 ist dazu eingerichtet, bei einer Schuberzeugung durch mindestens ein Triebwerk 114 (Abb. 1) der Trägerrakete 100 mittels der Starthilfeeinheit 200 in einem Horizontalstart abzuheben. Dabei ist die Starthilfeeinheit 200 nach erreichter Überschallgeschwindigkeit von der weiterfliegenden Trägerrakete 100 lösbar sowie dazu eingerichtet, nach ihrer Ablösung V/5 von der Trägerrakete 100 zurück zur Erdoberfläche O zu fliegen. Die Starthilfeeinheit 200 bietet vorzugsweise alle erforderlichen strukturellen Unterstützungen, um für eine Trägerrakete 100, die für den Vertikalstart ausgelegt wurde, diese bzw. deren wesentliche Komponenten ohne strukturelle Änderungen nutzen zu können.

Offenbart sind weiterhin ein Abflugverfahren für ein Trägerraketensystem 1 sowie ein Herstellungsverfahren für ein Trägerraketensystem 1.

## Beschreibung

Die vorliegende Erfindung betrifft ein Trägerraketensystem, das eine Trägerrakete zum Transport mindestens einer Last sowie eine Starthilfeeinheit umfasst. Die Erfindung betrifft weiterhin eine Trägerrakete für ein solches Trägerraketensystem, ein Abflugverfahren sowie ein Herstellungsverfahren jeweils für ein solches Trägerraketensystem.

Trägerraketen werden in der Raumfahrt dazu verwendet, Lasten wie insbesondere Bauteile oder Versorgungsmaterial für eine Raumstation oder auch Satelliten von der Erdoberfläche in eine vorgesehene Umlaufbahn zu transportieren.

Zum Ermöglichen eines Aufstiegs derartiger Trägerraketen sind verschiedene Techniken bekannt. So sieht das Konzept der Pegasus-Trägerrakete eine Ankopplung an ein konventionelles Transportflugzeug (Z.B.: B-52 und Lockheed Tristar, Pegasus/Boeing 747-400, Launcher One) vor, dass die Trägerrakete in eine vorgesehene Höhe transportiert und dann für den raketengetriebenen Weiterflug losgelassen (ausgeklinkt) wird.

Aus der Druckschrift US 5 255 873 A ist ein Flügel-Gleitsystem bekannt, das mit einem Raumfahrzeug verbunden wird. Damit soll ein Start von einer Flughafen-Startbahn aus möglich werden. Nach Erreichen eines vorgesehenen Anstiegswinkels, zur Vermeidung eines erhöhten aerodynamischen Bremswiderstandes jedoch vor Erreichen der Schallgeschwindigkeit (insbesondere bei einer Mach-Zahl von 0,9) wird das Flügelsystem vom Raumfahrzeug gelöst.

Die Druckschrift DE 195 45 711 C1 offenbart einen wiederverwendbaren Tragkörper mit aerodynamischen Auftriebsmitteln zur Starthilfe eines Fluggeräts wie insbesondere einer Rakete. Der Tragkörper weist dabei insbesondere Treibstofftanks zur Verbindung mit dem Fluggerät auf, dessen Triebwerk während der Transportphase aus den Treibstofftanks im Tragkörper gespeist wird und den Schub für die Gesamtanordnung erzeugt. Trennventile ermöglichen einer Trennung der Treibstofftanks im Tragkörper bei dessen Ablösung.

Gemäß alternativen konventionellen Konzepten ist für die Trägerrakete ein vertikaler Start vorgesehen. Der vertikale Start solcher Raketen kann mit oder ohne abzulösende Hilfsraketen (sogenannte "Booster") erfolgen, die mindestens ein zusätzliches Triebwerk umfassen und damit zusätzlichen Schub erzeugen. Der um die Booster verminderte Teil der Trägerrakete kann dann immer noch als Stufenrakete ausgebildet sein, so dass er während des Flugs sogenannte "untere Stufen" mit leeren Treibstofftanks und/oder nicht mehr benötigten Triebwerken abwerfen kann. Auf diese Weise muss lediglich eine relativ leichte, sogenannte "Oberstufe" der Rakete zur vorgesehenen Umlaufbahn fliegen. Aufgrund der Massenreduktion kann so Treibstoff eingespart bzw. bei gleichem Treibstoffverbrauch eine höhere Nutzlast oder höhere Umlaufbahn erreicht werden.

Der vorliegenden Erfindung liegt die Aufgabe zugrunde, eine Technik bereitzustellen, die ein alternatives Startkonzept für Trägerraketen ermöglicht.

Die Aufgabe wird gelöst durch ein Trägerraketensystem gemäß Anspruch 1, eine Trägerrakete gemäß Anspruch 7, ein Abflugverfahren gemäß Anspruch 8 und ein Herstellungsverfahren gemäß Anspruch 9. Vorteilhafte Ausführungsformen sind in den Unteransprüchen, der Beschreibung und den Figuren offenbart.

Ein erfindungsgemäßes Trägerraketensystem umfasst eine Trägerrakete zum Transport mindestens einer Last in eine Erdumlaufbahn. Darüber hinaus umfasst das Trägerraketensystem eine lösbar mit der Trägerrakete zu verbindende oder bereits verbundene Starthilfeeinheit. Das Trägerraketensystem ist dazu eingerichtet, in einem gekoppelten Zustand, wenn also die Trägerrakete mit der Starthilfe verbunden ist, mittels der Starthilfeeinheit in einem Horizontalstart abzuheben. Ein dafür notwendiger Schub wird dabei mindestens teilweise durch mindestens ein (vorzugsweise als Flüssigkeitsraketentriebwerk ausgebildetes) Triebwerk der Trägerrakete erzeugt. Die Starthilfeeinheit ist insbesondere dazu eingerichtet, das kombinierte Trägerraketensystem mit aerodynamischem Auftrieb zu unterstützen; vorzugsweise umfasst sie mindestens zwei Tragflächen.

Insbesondere ist das Trägerraketensystem dazu eingerichtet, im Flug auf Überschallgeschwindigkeit zu beschleunigen und die Starthilfeeinheit, nachdem die für das System optimalen Bedingungen in Bezug auf Geschwindigkeit, Höhe und Steigwinkel erreicht sind, von der weiterfliegenden Trägerrakete abzulösen. Die Starthilfeeinheit ist dazu eingerichtet, nach dem Ablösen und einer ballistischen Flugphase zurück zur Erdoberfläche, insbesondere zu einer vorgesehenen Landebahn zu fliegen. Vorzugsweise ist sie wiederverwendbar, also dazu eingerichtet, nach dem Ablösen von der Trägerrakete und dem Rückflug zur Erdoberfläche lösbar mit mindestens einer zweiten Trägerrakete verbunden zu werden und mit dieser analog in einem Horizontalstart abzuheben.

Die Trägerrakete eines erfindungsgemäßen Trägerraketensystems ist dabei vorzugsweise als eine Mehrstufenrakete ausgebildet. Insbesondere umfasst sie in diesem Fall mehrere Stufen und ist dazu eingerichtet, eine oder mehrere der Stufen abzuwerfen, vorzugsweise nach dem Ablösen der Starthilfeeinheit.

Die vorliegende Erfindung sieht somit eine Trägerrakete vor, die mittels einer zurückkehrenden Starthilfeeinheit horizontal abheben und auf Überschallgeschwindigkeit beschleunigen kann. Auf die für vertikale Starts erforderlichen hohen Montage- und Starttürme kann somit verzichtet werden, was eine erhebliche Ersparnis an Material und Aufwand bedeutet. Die Trennung nicht vor Erreichen einer Überschallgeschwindigkeit bedeutet eine wesentlich verbesserte Effizienz der allein weiterfliegenden Trägerrakete. Mittels der Starthilfeeinheit kann aufgrund des aerodynamischen Auftriebs die Treibstoffzuladung gegenüber für den Senkrechtstart vorgesehenen Trägerraketensystemen vorzugsweise durch Verlängerung der Treibstofftanks in der ersten Stufe wesentlich erhöht werden, wodurch das Antriebsvermögen gegenüber dem Senkrechtstart erhöht wird. Dieser Vorteil kann direkt zur Erhöhung der Nutzlastkapazität genutzt werden. Im Vergleich zu herkömmlichen Trägerraketensystemen können bei etwa gleichbleibender Nutzlast Stufen wie z.B. Booster eingespart werden und/oder kann (bei gegenüber dem Senkrechtstart unverändertem Tank) die erste Stufe mit kostengünstigeren kleineren oder einer geringeren Anzahl von Hauptantrieben betrieben werden.

Die Starthilfeeinheit ist vorzugsweise mit mindestens einem Steuerungssystem ausgerüstet, das insbesondere dazu eingerichtet sein kann, die gekoppelte Phase und den Rückflug zu kontrollieren. Vorzugsweise umfasst ein derartiges Steuerungssystem wenigstens eine Ruderanlage. Deren verschwenkbaren Steuerflächen (z.B. (auch kombinierbare) Höhen-, Quer- und Trimmruder und an zusätzlichen Stabilisationsflächen angebrachte Seitenruder) können die Kontrolle des Trägersystems in allen aerodynamischen Flugphasen um die Hauptachsen ermöglichen. Die Ruderanlagen können zusätzlich durch den verschwenkbaren Hauptantrieb der ersten Stufe unterstützt werden, um die Masse der Ruderanlagen und Steuerflächen optimal zu gestalten. Für die Kontrolle der ballistischen Phase ist die Starthilfeeinheit vorzugsweise mit einem Lageregelungssystem nach dem Rückstoßprinzip und/oder bei ausreichender Restatmosphäre mit einem einziehbaren oder abtrennbaren Stabilisierungsfallschirm ausgerüstet.

Von ihrer Oberstufe und bis zu ihrer untersten Stufe hat die Trägerrakete vorzugsweise durchgehend eine zylindrische Form (mit zugehöriger Zylinderachse als Längsachse der Trägerrakete). Insbesondere ist die Trägerrakete eines erfindungsgemäßen Trägerraketensystems vorzugsweise boosterlos ausgebildet, also frei von Boostern, so dass der mit diesen üblicherweise verbundene hohe Material- und Montageaufwand entfällt.

Das mindestens eine zur Schuberzeugung vorgesehene Triebwerk der Trägerrakete wird vorzugsweise ausschließlich aus mindestens einem von der Trägerrakete umfassten Tank gespeist; ein solcher Tank kann insbesondere ein integraler Tank sein, also eine Tankwand haben, die als Tragstruktur fungiert. Insbesondere kann die Trägerrakete sämtliche Treibstofftanks des Trägerraketensystems umfassen.

Gemäß vorteilhaften Ausführungsformen eines erfindungsgemäßen Trägerraketensystems sind/ist mindestens ein Triebwerk, ein Nutzlastadapter, eine Nutzlastverkleidung und/oder die ganze Oberstufe dazu geeignet, entsprechend in einer für einen vertikalen Start vorgesehenen Stufenrakete (aufgrund der englischen Bezeichnung "vertical take-off" im folgenden auch als "VTO-Stufenrakete" abgekürzt) verwendet zu werden.

Insbesondere können somit die entsprechenden Komponenten einer für einen vertikalen Start konzipierten Stufenrakete als Komponenten der Trägerrakete eines erfindungsgemäßen Trägerraketensystems eingesetzt werden.

Die Verwendung mindestens einer solchen Komponente im für einen Horizontalstart vorgesehenen erfindungsgemäßen Trägerraketensystem bietet den Vorteil einer Entwicklungs- bzw. Konstruktionsersparnis, zudem können für diese Komponenten bestehende Fertigungsanlagen, die für vertikal startende Stufenraketen errichtet wurden, auf einfache Weise auch für die Herstellung der genannten Komponente(n) eingesetzt werden.

Alternativ oder zusätzlich kann in Ausführungsformen eines erfindungsgemäßen Trägerraketensystems, dessen Trägerrakete als Mehrstufenrakete ausgebildet ist, mindestens eine Stufe (beispielsweise zumindest eine Hauptstufe) der Trägerrakete wenigstens einen Stufenabschnitt umfassen, der dazu geeignet oder sogar dazu konzipiert ist, als mindestens ein Abschnitt einer entsprechenden Stufe in einer/der für einen vertikalen Start vorgesehenen Stufenrakete verbaut zu werden. Ein derartiger Stufenabschnitt kann dabei die ganze Stufe der Trägerrakete oder lediglich einen Teil der jeweiligen Stufe der Trägerrakete umfassen, insbesondere einen in Längsrichtung der Trägerrakete verkürzten Abschnitt. Eine solche alternative Verwendung kann direkt möglich sein oder eine Umarbeitung erfordern.

Insbesondere können somit die entsprechenden Stufenabschnitte einer VTO-Stufenrakete als Stufenabschnitte der Trägerrakete eines erfindungsgemäßen Trägerraketensystems eingesetzt werden.

Zusätzlich zu einer oder mehrerer der genannten Komponente(n) und/oder mindestens einem oder mehreren Stufenabschnitt, die/der zur Verwendung in einer für einen vertikalen Start geeigneten Stufenrakete geeignet bzw. konzipiert ist/sind, kann die Trägerrakete bei derartigen Ausführungsformen eines erfindungsgemäßen Trägerraketensystems mindestens einen Abschnitt (als vorzugsweise zylinderförmigen Teil der Trägerrakete um deren Längsmittelachse) umfassen, der einen Tank oder zumindest einen Teil eines Tanks zur Versorgung eines Triebwerks, insbesondere eines Haupttriebwerks der Trägerrakete umfasst; derartige Abschnitte, um die die Trägerrakete eines Trägerraketensystems im Vergleich zu einer VTO-Stufenrakete erweitert ist, werden im Folgenden als "Tankabschnitte" bezeichnet.

Im Vergleich zu der für einen Vertikalstart konzipierten Stufenrakete, in der verwendet zu werden der mindestens eine Stufenabschnitt geeignet ist, weist die Trägerrakete bei derartigen Ausführungsformen somit aufgrund des mindestens einen zusätzlichen Tankabschnitts mindestens einen zusätzlichen und/oder mindestens einen vergrößerten Tank zur Versorgung mindestens eines ihrer Triebwerke auf. Dadurch kann eine für den horizontalen Start ausreichende Treibstoffversorgung der Trägerrakete gewährleistet und ein Fehlen von Boostern kompensiert werden.

Im Vergleich zur (für einen vertikalen Start vorgesehenen) VTO-Stufenrakete, in der verwendet zu werden die genannte/n Komponente/n bzw. Stufenabschnitt/e einer Trägerrakete gemäß einer vorteilhaften Ausführungsform geeignet sind, kann die Trägerrakete eine mindestens 1,2-fache oder sogar mindestens 1,3-fache Länge aufweisen. Insbesondere kann die Trägerrakete eines erfindungsgemäßen Trägerraketensystems so aufgebaut sein, dass sie durch Reduktion mindestens einer ihrer Stufen (beispielsweise um mindestens einen solchen Tankabschnitt) sowie Ergänzung von mindestens einem Booster in die für einen vertikalen Start geeignete Stufenrakete umzubauen wäre.

Die Trägerrakete kann bei ihrem Start ein Schub-Gewichts-Verhältnis haben, das kleiner ist als 1, kleiner als 0,9, als 0,8 oder sogar als 0,6. Während ein vertikaler Start für die Trägerrakete bei derartigen Ausführungsformen somit nicht möglich wäre, ermöglicht die Starthilfeeinheit den Aufstieg im horizontalen Start. Insbesondere bei Ausführungsformen mit mindestens einem der genannten zusätzlichen Tankabschnitte kann die Trägerrakete ein solch kleines Schub-Gewichts-Verhältnis aufweisen.

Zur Stabilisierung einer Trägerrakete kann die Starthilfeeinheit vorzugsweise eine Stützstruktur umfassen. Damit können insbesondere Belastungen aufgefangen werden, die aus dem horizontalen Start resultieren, speziell auch in den genannten Ausführungsformen mit Flüssigkeitsraketentriebwerk. Insbesondere kann so eine Anpassung einer Primärstruktur der Trägerrakete bzw. eines oder mehrerer Konstruktionsparameter/s wie beispielsweise einer Tankwandstärke an die erwähnten Belastungen entbehrlich werden. Bei einer Ausführungsform mit dem genannten mindestens einen Tankabschnitt kann die Stützstruktur insbesondere Beanspruchungen entgegenwirken, die infolge der zusätzlichen Länge auftretenden. Alternativ oder zusätzlich kann die Stützstruktur dazu eingerichtet sein, im mit der Trägerrakete verbundenen Zustand der Starthilfeeinheit im Übergangs- bzw. Kontaktbereich von Trägerrakete und Starthilfeeinheit eine aerodynamische Form des Trägerraketensystems zu bewirken.

Da die Stützstruktur als Teil der Starthilfeeinheit von der Trägerrakete abgelöst wird, kann bei dieser für den Weiterflug Masse und damit Treibstoff gespart bzw. Nutzlastmasse erhöht werden. Im mit der Trägerrakete verbundenen Zustand der Starthilfeeinheit liegt die Stützstruktur vorzugsweise entlang mindestens einer Linie oder sogar in mindestens einer Fläche durchgehend (flächig) an der Trägerrakete an.

Gemäß vorteilhaften Ausführungsformen mit einer derartigen Stützstruktur umfasst diese zwei Wände, zwischen denen die Trägerrakete im mit der Starthilfeeinheit verbundenen Zustand angeordnet ist. Die Wände erstrecken sich dabei vorzugsweise jeweils in einer Längsrichtung der Trägerrakete. Insbesondere können die Wände zumindest einen Teil einer Rinne bilden, die in Längsrichtung der Trägerrakete verläuft und vorzugsweise einen Querschnitt senkrecht zur Längsachse aufweist, der symmetrisch ist. Der Trägerrakete im verbundenen Zustand zugewandte Flächen der beiden Wände können mindestens bereichsweise jeweils entlang einer jeweiligen Ebene verlaufen. Insbesondere können dann die beiden Ebenen parallel zueinander verlaufen oder zueinander geneigt sein.

Alternativ kann die Stützstruktur mindestens eine (im verbundenen Zustand) der Trägerrakete zugewandte Oberfläche haben, die entlang einem Zylindermantel verläuft; im Falle mehrerer derartiger Oberflächen verlaufen diese vorzugsweise entlang desselben Zylindermantels. Diese Ausführungsformen sind insbesondere vorteilhaft, wenn eine Außenoberfläche der Trägerrakete ebenfalls entlang des Zylindermantels verläuft.

Ein erfindungsgemäßes Trägerraketensystem kann dazu eingerichtet sein, eine/die Nutzlastverkleidung, die zum Schutz mindestens einer durch die Trägerrakete jeweils transportierten Last vorgesehen ist, im Flug abzulösen und mittels der Starthilfeeinheit zur Erdoberfläche (insbesondere zur vorgesehenen Landebahn) zu transportieren. Dies ermöglicht eine vorteilhafte Lastverminderung nach den für den Schutz kritischen Phasen des Starts sowie des Flugs in dichten Luftschichten und eine Wiederverwendung der Nutzlastverkleidung. Die Nutzlastverkleidung kann dabei insbesondere mit der oben genannten, in vorteilhaften Ausführungsformen für die Verwendung in einer für einen Vertikalstart vorgesehenen Stufenrakete geeigneten Nutzlastverkleidung übereistimmen. Gemäß vorteilhaften Ausführungsformen ist die Nutzlastverkleidung mindestens teilweise zusammenfaltbar und/oder an die Starthilfeeinheit anzuklappen. So kann ein Luftwiderstand für den Rückflug optimiert werden.

Vorzugsweise weist die Starthilfeeinheit im Unterschallflug, der für einen ersten Teil der Startphase aber insbesondere für den antriebslosen Rückflug genutzt wird, eine Gleitzahl (also ein Verhältnis von Höhenverlust pro Wegstrecke im Gleitflug) auf, die im Bereich von 1:13 bis 1:11 liegt.

Gemäß vorteilhaften Ausführungsformen kann die Starthilfeeinheit eine veränderliche Flügelform aufweisen, beispielsweise indem sie mindestens ein kombiniertes Wölb-/Quer-/Höhenruder mit Wölbfunktion umfasst. Damit kann eine Flügelform der Starthilfeeinheit beim Rückflug im Vergleich zum Aufstieg vorteilhaft im Sinne einer großen Reichweite bzw. einer hohen Gleitzahl geändert werden.

Zum Starten der Starthilfeeinheit kann diese dazu eingerichtet sein, mit mindestens einer (jeweils vorzugsweise wiederverwendbaren, separaten) Fahr- und/oder Schlitteneinrichtung verbunden zu werden. Auf diese Weise kann ein besonders geringes Gewicht der Starthilfeeinheit und damit des Trägerraketensystems insgesamt beim Start erreicht werden. Die Starthilfeeinheit kann dann insbesondere dazu eingerichtet sein, mit einer zum Abheben erfolgenden Verschwenkung mindestens eines Höhenruders eine Trennung von der Fahr- und/oder Schlitteneinrichtung zu bewirken. Ein erfindungsgemäßes Trägerraketensystem kann eine solche Fahr- und/oder Schlitteneinrichtung umfassen Gemäß vorteilhaften Ausführungsformen der vorliegenden Erfindung umfasst die Starthilfeeinheit selbst mindestens eine Start- und/oder Landevorrichtung; eine solche Vorrichtung kann dabei ein Rollsystem (mit mindestens einem Rad) und/oder ein Schlittensystem (mit mindestens einer Kufe) umfassen. Vorzugsweise ist sie dazu eingerichtet, mit der Starthilfeeinheit mitzufliegen, also nicht nach dem Start von ihr abgelöst zu werden. Insbesondere kann eine solche Vorrichtung sowohl zum Starten als auch zum Landen einsetzbar sein. Im Falle einer Startvorrichtung wird mit ihr ein sicherer Start ermöglicht, der vorzugsweise auch Risiken eines ggf. nötigen Startabbruchs minimiert. Im Falle einer Landevorrichtung wird ein beschädigungsfreies Landen der abgelösten Starthilfeeinheit an einem vorgesehenen Landeplatz und ein einfaches Wiederverwenden ermöglicht, insbesondere ohne dass ein Bergen der Starthilfe erforderlich ist.

Die mindestens eine Start- und/oder Landevorrichtung kann für das Gewicht des beladenen Trägerraketensystems ausgelegt, also zu dessen Tragen konzipiert sein. Insbesondere ermöglicht dies Testflüge (ohne Ablösen der Starthilfeeinheit) mit Rückkehr des Trägerraketensystems zur Erdoberfläche, beispielsweise zur Festlegung einer Flugenveloppe.

Alternativ kann die mindestens eine Start- und/oder Landevorrichtung lediglich für das Gewicht der Starthilfeeinheit ausgelegt sein. In diesem Fall ist die Starthilfeeinheit vorzugsweise dazu eingerichtet, zum Starten wie oben erwähnt lösbar mit einer (zusätzlichen) Fahr- und/oder Schlitteneinrichtung verbunden zu werden.

Gemäß vorteilhaften Ausführungsformen der vorliegenden Erfindung umfasst die Starthilfeeinheit ein elektronisches und/oder ein mechanisches Steuerungssystem und/oder ein kombiniert elektronischmechanisches Steuerungssystem zum Steuern des startenden und/oder des fliegenden Trägerraketensystems vor dem Ablösen der Starthilfeeinheit, zum Bewirken des Ablösens der Flügeleinheit von der Trägerrakete und/oder zum Steuern der Starthilfeeinheit auf ihrem Rückflug zur Erdoberfläche.

Das Steuerungssystem kann dabei jeweils dazu eingerichtet sein, das Steuern allein oder in Zusammenwirken mit mindestens einem Steuerungssystem der Trägerrakete vorzunehmen. Ein vorzugsweise von der Starthilfeeinheit umfasstes Kommunikationsmittel kann dabei dazu eingerichtet sein, eine Kommunikationsverbindung zu mindestens einer Bodenstation und/oder mindestens einer fliegenden Komponente wie insbesondere einem Satelliten oder einer Weltraumstation zu unterhalten. So können auch externe Daten für das Steuern verwendet werden. Insbesondere kann die Starthilfeeinheit dazu eingerichtet sein, autonom oder ferngesteuert zu navigieren.

Die Starthilfeeinheit eines erfindungsgemäßen Trägerraketensystems kann vorzugsweise dazu eingerichtet sein, mindestens in Teilen ihres Rückflugs insbesondere im Segelflug zur Erdoberfläche zurückzugleiten.

Die Starthilfeeinheit kann triebwerklos ausgebildet sein; dies ermöglicht insbesondere eine besonders leichte Ausführung.

Gemäß alternativen Ausführungsformen eines erfindungsgemäßen Trägerraketensystems umfasst die Starthilfeeinheit ein Antriebssystem, insbesondere ein luftatmendes Antriebssystem. Das Antriebssystem kann dazu eingerichtet sein, im angekoppelten, also mit der Trägerrakete verbundenen Zustand der Starthilfeeinheit einen vom Triebwerk der Trägerrakete erzeugten Schub zu verstärken. Alternativ oder zusätzlich kann das Antriebssystem dazu eingerichtet sein, die Starthilfeeinheit nach ihrem Ablösen von der Trägerrakete zumindest phasenweise anzutreiben. Insbesondere kann damit eine fehlgeschlagene Landung abgebrochen und neu initiiert werden.

Die Starthilfeeinheit kann mindestens eine Versorgungseinrichtung umfassen, die dazu eingerichtet ist, die Trägerrakete im mit der Starthilfeeinheit verbundenen Zustand mit Gas, elektrischem Strom und/oder hydraulischem Druck zu versorgen. Auf diese Weise kann bei der Trägerrakete selbst Gewicht eingespart werden.

Ein erfindungsgemäßes Abflugverfahren für ein Trägerraketensystem mit einer als Mehrstufenrakete ausgebildeten Trägerrakete und einer mit dieser verbundenen Starthilfeeinheit umfasst ein horizontales Starten des Trägerraketensystems mittels der Starthilfeeinheit, ein Beschleunigen auf eine Überschallgeschwindigkeit (also eine Geschwindigkeit oberhalb der Schallgeschwindigkeit), ein Ablösen der Starthilfeeinheit von der weiterfliegenden Trägerrakete, nachdem die Überschallgeschwindigkeit erreicht wurde, ein Weiterfliegen mindestens einer Stufe der Trägerrakete in eine Erdumlaufbahn sowie ein Zurückfliegen der Starthilfeeinheit zur Erdoberfläche, insbesondere zu einer vorgesehenen Landebahn.

Die Trägerrakete weist vorzugsweise mindestens ein Flüssigkeitsraketentriebwerk auf. Sofern sie als Mehrstufenrakete ausgebildet ist, umfasst vorzugsweise mindestens eine ihrer Stufen ein solches Flüssigkeitstriebwerk.

Das Beschleunigen auf Überschallgeschwindigkeit umfasst vorzugsweise einen abgeknickten Aufstieg (auch als "dog leg ascent" bezeichnet). Dabei wird zunächst senkrecht zum geplanten Azimut ein hoher Steigungswinkel angestrebt, der einen raschen Höhengewinn und eine reduzierte Rückflugdistanz ermöglicht, und zum weiter beschleunigten Ansteigen wird (noch) bei einer Unterschallgeschwindigkeit zunächst in den geplanten Azimut geschwenkt und der Steigwinkel abgeflacht, um das Überschreiten der Schallgeschwindigkeit zu erleichtern. Die bereits erreichte Flughöhe, in der gegenüber Bodenbedingungen die Luftdichte reduziert und die Triebwerksleistung erhöht ist, erleichtert dabei den Schalldurchgang.

Vor dem Ablösen erfolgt vorzugsweise ein Manöver zum erneuten Erhöhen des Steigungswinkels in die vorgesehene Elevation für die Abtrennung.

Gemäß vorteilhaften Ausführungsformen eines erfindungsgemäßen Abflugverfahrens erfolgt dieses erneute Erhöhen des Steigungswinkels bei Überschallgeschwindigkeit, vorzugsweise bei einer Mach-Zahl von mindestens 1,5. Vorzugsweise liegt dabei die Mach-Zahl nicht über einer Obergrenze, die bestimmt ist durch die Limitation der verwendeten Materialien gegenüber der mit der Mach-Zahl steigenden thermalen Aufheizung.

Nach dem Ablösen der Starthilfeeinheit kann die Trägerrakete ihren Flug im erhöhten Anstiegswinkel fortsetzen, ehe sie in eine ballistische Trajektorie eintritt. Das Weiterfliegen der Trägerrakete kann ein Abwerfen mindestens einer Stufe der Trägerrakete umfassen. Ein Aufrichten (pitch-up) der Trägerrakete erfolgt vorzugsweise zu einem in Abhängigkeit von jeweils herrschenden aerothermalen Bedingungen bestimmten Zeitpunkt. Dadurch kann das Erreichen der Erdumlaufbahn für mindestens eine Stufe der Trägerrakete gewährleistet werden.

Sofern das Trägerraketensystem (wie oben erwähnt) dazu eingerichtet ist, eine Nutzlastverkleidung im Flug abzulösen und mittels der Starthilfeeinheit zur Erdoberfläche zu transportieren, kann das Ablösen der Starthilfeeinheit in einer Höhe erfolgen, in der die Nutzlastverkleidung entbehrlich bzw. ihr Entfernen vorteilhaft ist, beispielsweise wenn der durch die Restatmosphäre erzeugte thermische Fluss eine vorgegebene Schranke unterschreitet, die Atmosphäre also hinreichend dünn ist. Das Ablösen kann bei derartigen Ausführungsformen also entsprechend hinausgezögert werden. Gemäß vorteilhaften Varianten wird die Nutzlastverkleidung für den Rückflug mit der Starthilfeeinheit mindestens teilweise zusammengefaltet und/oder an die Starthilfeeinheit angeklappt.

Der Rückflug der Starthilfeeinheit zurück zur Erdoberfläche umfasst nach dem Ablösen vorzugsweise zunächst eine ballistische Phase und danach eine Atmosphärenbremsung. Vorteilhaft ist dabei ein Anströmwinkel senkrecht zur Flügelfläche, weil so maximaler Widerstand erzeugt wird ohne zu diesem Zeitpunkt unerwünschten (flugbahnverlängernden) Auftrieb.

Für die Kontrolle der Fluglage in der ballistischen Phase ohne aerodynamisch nutzbarer Atmosphäre und während dem atmosphärischen verzögern in der Hochatmosphäre ist die Starthilfeeinheit mit einem Lageregelungssystem nach dem Rückstoßprinzip und/oder bei ausreichender Restatmosphäre mit einem einziehbaren oder abtrennbaren Stabilisierungsfallschirm ausgerüstet.

Vorzugsweise sobald jeweils herrschende aerothermische Bedingungen es zulassen (also zu einem in Abhängigkeit von diesen Bedingungen gewählten Zeitpunkt), wird eine Steilkurve zu einem vorgesehenen Landeplatz hin initiiert. Das damit frühestmögliche Vollziehen der Steilkurve ermöglicht eine Einsparung von Energie, die für den weiteren Flug genutzt werden kann.

Als alternatives Verfahren kann die Starthilfeeinheit im absteigenden Ast der ballistischen Kurve durch rollen in Rückenlage gebracht werden um anschließend den Anströmwinkel nicht vollständig senkrecht zur Flugrichtung auszurichten um den dann entstehenden Auftrieb zu nutzen den ballistischen Zweig zu verkürzen. Eine Steilkurve ist in diesem Fall nicht erforderlich da dieses Manöver in Form eines halben Loopings direkt in die Rückflugrichtung führt.

Gemäß vorteilhaften Ausführungsformen eines erfindungsgemäßen Abflugverfahrens umfasst der Rückflug mindestens eine Gleitphase, in der die Starthilfeeinheit insbesondere im Segelflug zur Erdoberfläche gleitet. Zum Erreichen einer vorteilhaften Gleitgeschwindigkeit unterhalb der Schallgeschwindigkeit kann der Rückflug, insbesondere die Gleitphase nach der Steilkurve ein Anstiegsmanöver umfassen, um die überschüssige Geschwindigkeit in Ausgangshöhe zu wandeln und so eine maximale Reichweite für den Rückflug im Segelflug zu erreichen.

Sofern die Starthilfeeinheit mindestens ein (insbesondere luftatmendes) Antriebssystem umfasst, kann dieses im mit der Trägerrakete verbundenen Zustand zur Unterstützung des von deren Triebwerk erzeugten Schubs (insbesondere beim Start, bei der Beschleunigung und/oder beim Flug mit Überschallgeschwindigkeit) und/oder zum Rückflug und/oder bei einem fehlgeschlagenen Landeversuch genutzt werden.

Insbesondere ist ein erfindungsgemäßes Trägerraketensystem vorzugsweise dazu eingerichtet, ein erfindungsgemäßes Abflugverfahren gemäß einer der in dieser Schrift offenbarten Ausführungsformen durchzuführen bzw. dient ein erfindungsgemäßes Abflugverfahren dem Starten eines erfindungsgemäßen Trägerraketensystems nach einer der in dieser Schrift offenbarten Ausführungsformen.

Ein erfindungsgemäßes Herstellungsverfahren dient der Herstellung eines erfindungsgemäßen Trägerraketensystems gemäß einer der in dieser Schrift offenbarten Ausführungsformen und umfasst ein Fertigen der Trägerrakete, bei dem mindestens ein Stufenabschnitt, mindestens ein Triebwerk, mindestens eine Nutzlastadapter und/oder mindestens eine Nutzlastverkleidung verbaut werden, der/die zur Verwendung in einer für einen vertikalen Start vorgesehenen Stufenrakete geeignet, insbesondere konzipiert bzw. konstruiert sind.

Gemäß vorteilhaften Ausführungsvarianten umfasst ein erfindungsgemäßes Herstellungsverfahren ein Fertigen der Trägerrakete mit mindestens einer Raketenstufe, die für eine zum vertikalen Starten geeignete Stufenrakete geeignet oder sogar konzipiert ist. Insbesondere kann eine solche Raketenstufe mindestens teilweise in einer Fertigungslinie gefertigt werden, die zur Fertigung von Raketenstufen für vertikal startende Stufenraketen angelegt und/oder geeignet ist. Das Herstellungsverfahren kann insbesondere ein Umbauen vorgesehener Booster-Anschlussstellen in Anschlussstellen zur Verbindung mit der Starthilfeeinheit umfassen.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es zeigen schematisch:
- Figur 1:: eine exemplarische Ausführungsform einer erfindungsgemäßen Trägerrakete im Vergleich zu einer für einen vertikalen Start vorgesehenen Stufenrakete mit Boostern;
- Figur 2:: eine Draufsicht auf ein Ausführungsbeispiel eines erfindungsgemäßen Trägerraketensystems;
- Figur 3:: ein exemplarisches erfindungsgemäßes Trägerraketensystem in einem Querschnitt;
- Figur 4:: eine Starthilfeeinheit eines Ausführungsbeispiel eines erfindungsgemäßen Trägerraketensystems in einer Seitenansicht;
- Figur 5:: ein Ausführungsbeispiel eines erfindungsgemäßen Trägerraketensystems mit einem zusätzlichen Fahrsystem in einer Seitenansicht; und
- Figur 6:: einen Ablauf eines erfindungsgemäßen Abflugverfahrens gemäß einem Ausführungsbeispiel.

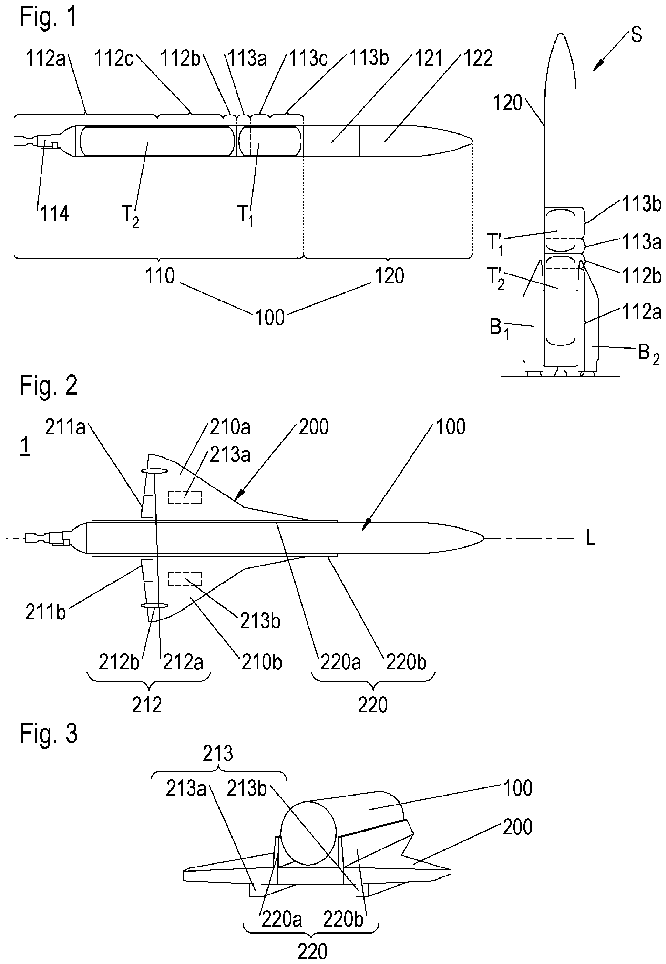

Die Figur 1 zeigt die Trägerrakete 100 einer Ausführungsform eines erfindungsgemäßen Trägerraketensystems im Vergleich zu einer für einen Vertikalstart konzipierten Stufenrakete S. Die Trägerrakete 100 umfasst eine Oberstufe 120 mit einer Antriebsstufe 121 und einer Nutzlastverkleidung 122 sowie mit einem in der Figur 1 nicht als solchen erkennbaren Nutzlastadapter und einer Flugsteuerung. Gemäß vorteilhaften Ausführungsformen ist die Nutzlastverkleidung 121 ablösbar, insbesondere kann das die Trägerrakete 100 umfassende Trägerraketensystem dazu eingerichtet sein, die Nutzlastverkleidung 121 mittels der zugehörigen (nicht dargestellten) Starthilfeeinheit nach deren Ablösen zurück zur Erdoberfläche zu bringen.

Die Trägerrakete 100 umfasst weiterhin eine erste Hauptstufe 110 mit Treibstofftanks für Brennstoff und Oxidator, die jeweils in einer Schnittdarstellung gezeigt sind, so dass in ihnen angeordnet Tanks T₁ bzw. T₂ sichtbar sind.

Die Hauptstufe 110 umfasst im gezeigten Ausführungsbeispiel die Stufenabschnitte 112a, 112b (die vorliegend jeweils einen Teil des Tanks T₁ umfassen und von denen der Stufenabschnitt 112a zudem ein Triebwerk 114 umfasst) sowie dazwischenliegend einen zusätzlichen Tankabschnitt 112c. Darüber hinaus umfasst die Hauptstufe 110 die Stufenabschnitte 113a, 113b (die vorliegend jeweils einen Teil des Tanks T₂ umfassen) und dazwischenliegend einen Tankabschnitt 113c.

Die Stufenabschnitte 112a (mit Haupttriebwerk 114), 112b sowie die Stufenabschnitte 113a und 113b sind dabei vorliegend dazu geeignet bzw. konzipiert, in der rechts in der Figur 1 dargestellten, für einen vertikalen Start konzipierten Stufenrakete S (deren Struktur also an die beim vertikalen Aufstieg auftretenden Lasten angepasst ist) verwendet zu werden. Demgegenüber sind die zusätzlichen Tankabschnitte 112c und 113c nicht in der VTO-Stufenrakete S verbaut. Diese umfasst hingegen zusätzlich zwei Booster B₁ und B₂.

Das Weglassen der Booster B₁, B₂ bei der Trägerrakete 100 ermöglicht eine erhebliche Einsparung an Material und Aufwand und vermeidet Gefahren beim Auftreffen der Booster nach ihrem Abwurf auf der Erdoberfläche. Da Feststoff-Booster im Betrieb Schadstoffe ausstoßen, ist das Weglassen zudem ökologisch von Vorteil. Durch Verwendung der für die VTO-Stufenrakete S konzipierten Komponenten (Oberstufe 120, Stufenabschnitte 112a (mit Haupttriebwerk 114) , 112b, 113a und 113b) können dabei ein Konstruktionsaufwand reduziert und vorhandene (für die VTO-Stufenrakete S angelegte) Fertigungslinien auch für die Herstellung der Trägerrakete 100 genutzt werden.

In Bezug auf die Treibstoffversorgung wird das Fehlen der Booster durch die nicht in der VTO-Stufenrakete S enthaltenen Tankabschnitte 112c, 113c der Trägerrakete 100 kompensiert: Durch sie sind die Tanks T₁, T₂ der Trägerrakete 100 im Vergleich zu den Tanks T₁', T₂' der VTO-Stufenrakete S vergrößert.

Das Weglassen der Booster bei der Trägerrakete 100 bedingt zudem ein im Vergleich zur VTO-Stufenrakete vermindertes Schub-Gewichts-Verhältnis, das insbesondere kleiner sein kann als 1, kleiner als 0,9, als 0,8 oder sogar als 0,6. Während der Trägerrakete 100 damit ein vertikaler Start unmöglich ist, kann sie gemäß der vorliegenden Erfindung in Verbindung mit einer Starthilfeeinheit unter Ausnutzung aerodynamischen Auftriebs abheben und auf Überschallgeschwindigkeit beschleunigen, wie oben beschrieben ist und auch in Bezug auf die weiteren Figuren erläutert wird.

Die Figur 2 zeigt in einer Draufsicht ein erfindungsgemäßes Trägerraketensystem 1 mit einer Trägerrakete 100, die mit einer Starthilfeeinheit 200 verbunden ist. Die Starthilfeeinheit umfasst zwei Tragflächen 210a, 210b, die in Bezug auf eine durch die Längsachse L der Trägerrakete 100 verlaufende Symmetrieebene symmetrisch zueinander ausgebildet sind und die - für die kombinierbaren Funktionen des Höhenruders und des Querruders - verstellbare Steuerflächen 211a, 211b umfassen. Darüber hinaus sind Seitenstabilisatoren 212a und 212b mit Steuerflächen für die Seitenruderfunktion ausgerüstet.

Im dargestellten Ausführungsbeispiel umfasst die Starthilfeeinheit 200 zudem ein luftatmendes Antriebssystem 213 mit Triebwerken 213a, 213b. Das Antriebssystem 213 kann dazu eingerichtet sein, im dargestellten, mit der Trägerrakete 100 verbundenen Zustand der Starthilfeeinheit einen vom Triebwerk der Trägerrakete erzeugten Schub zu verstärken und/oder die Starthilfeeinheit 200 nach ihrem Ablösen von der Trägerrakete auf ihrem Rückflug zur Erdoberfläche anzutreiben.

Zur Stabilisierung der Trägerrakete 100 umfasst die Starthilfeeinheit 200 zudem eine Stützstruktur 220 mit zwei zueinander parallelen Wänden 220a, 220b, die sich im gezeigten, mit der Trägerrakete 100 verbundenen Zustand der Starthilfeeinheit 200 in Längsrichtung L der Trägerrakete 100 erstrecken und an jeweils einer Seite der Trägerrakete 100 anliegen. Die besonderen Belastungen, die aus einem Horizontalstart sowie der Verlängerung der Trägerrakete (im Vergleich zur vertikal startenden Stufenrakete S rechts in Figur 1) durch die Tankabschnitte 112c, 113c resultieren, können damit aufgefangen werden, ohne dass die Trägerrakete selbst für derartige Belastungen ausgelegt sein muss.

Die Figur 3 zeigt das Trägerraketensystem 1 in einer senkrecht zur Längsachse der Trägerrakete 100 erstellten Schnittansicht im verbundenen Zustand und von hinten. Insbesondere ist dabei erkennbar, wie die Wände 220a, 220b der Stützstruktur 220 der Starthilfeeinheit 200 jeweils entlang einer Linie an der Trägerrakete 100 anliegen und für eine aerodynamische Form des Trägerraketensystems 1 im Übergangs- bzw. Kontaktbereich von Trägerrakete 100 und Starthilfeeinheit 200 sorgen.

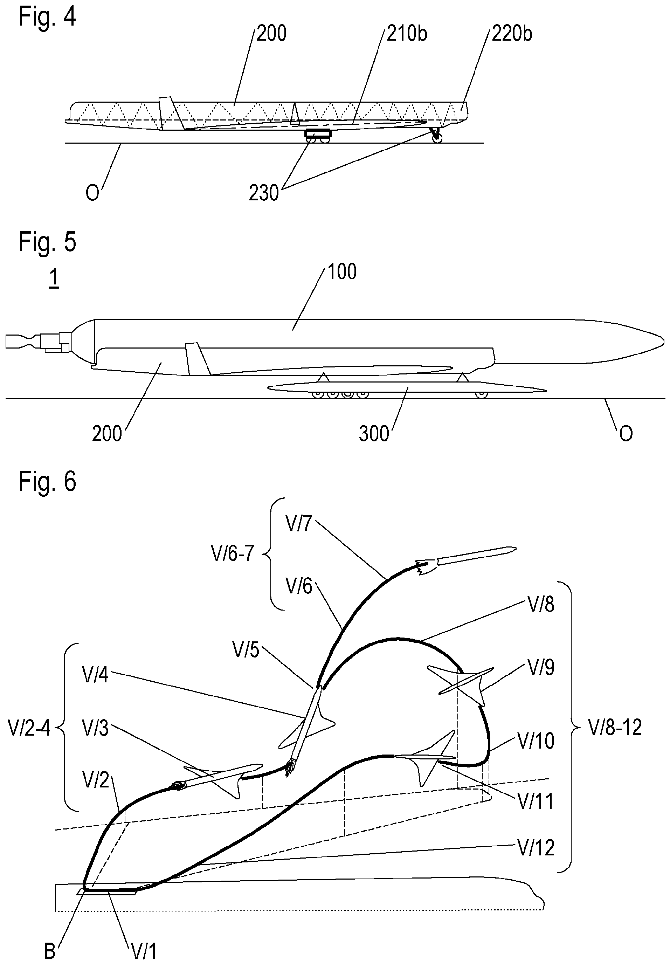

In der Figur 4 ist die Starthilfeeinheit 200 in einer Seitenansicht ohne die Trägerrakete, beispielsweise in einer Situation nach einer Rückkehr von einem Flug mit der Trägerrakete dargestellt. Die Erdoberfläche O kann dabei insbesondere eine Landebahn sein. Die Starthilfeeinheit umfasst eine Start- und/oder Landevorrichtung 230, die vorliegend ein Rollsystem mit Rädern umfasst. Vorzugsweise ist das Rollsystem mindestens teilweise einfahrbar, insbesondere hinter einer Verschalung der Starthilfeeinheit 200 versenkbar. So kann im Flug ein Luftwiderstand der Starthilfeeinheit gering gehalten werden.

Die Figur 5 zeigt ein erfindungsgemäßes Trägerraketensystem 1 in einem startbereiten Zustand. Die Erdoberfläche O kann dabei insbesondere eine Startbahn sein.

Zusätzlich zu der Trägerrakete 100 und der Starthilfeeinheit 200 umfasst das Trägerraketensystem 1 im dargestellten Ausführungsbeispiel eine Fahreinrichtung 300, mit der die Starthilfeeinheit 200 zum Beschleunigen des kombinierten Trägerraketensystems am Boden lösbar verbunden ist. Insbesondere ist das Trägerraketensystem 1 dazu eingerichtet, die Fahreinrichtung 300 beim Abheben der mit der Starthilfeeinheit 200 verbundenen Trägerrakete 100 am Boden zurückzulassen. Die Trennung kann insbesondere mit einer zum Abheben erfolgenden Verschwenkung mindestens eines Höhenruders und/oder durch eine Verschwenkung des Hauptantriebes der Starthilfeeinheit 200 erfolgen.

In der in Figur 5 dargestellten Situation ist die in der Figur 4 gezeigte Rollsystem eingefahren und daher nicht sichtbar; insbesondere wird das Rollsystem bei einer solchen Ausführungsform nicht zum Starten, sondern lediglich zum Landen verwendet, ist also Teil einer reinen Landevorrichtung.

In der Figur 6 ist der Ablauf einer Ausführungsform eines erfindungsgemäßen Abflugverfahrens durch mögliche Flugbahnen einer Trägerrakete und einer Starthilfeeinheit einer erfindungsgemäßen Trägerraketensystems dargestellt: Das Abflugverfahren beginnt dabei mit einem horizontales Starten V/1, das ein Anfahren, Beschleunigen und Abheben des Trägerraketensystems am bzw. von der Erdoberfläche O an einer Start- und Landebahn B umfasst. Ein fortgesetztes Beschleunigen V/2-4 umfasst einen abgeknickten Aufstieg V/2, bei dem ein zunächst hoher Steigungswinkel, der einen raschen Höhengewinn und eine reduzierte Rückflugdistanz ermöglicht, zum weiter beschleunigten Ansteigen V/3 abgeflacht wird und danach in einem Manöver wieder erhöht wird V/4.

Nach Erreichen vorgesehener Trennbedingungen erfolgt ein Ablösen V/5 der Starthilfeeinheit von der Trägerrakete. Die Trägerrakete setzt dann ihren Flug ohne die Starthilfeeinheit fort V/6-7, was ein weiteres Aufrichten V/6 und einen Weiterflug V/7 in eine Erdumlaufbahn bzw. ein Eintreten in eine ballistische Trajektorie umfasst. Wie oben erwähnt, erfolgt das Aufrichten vorzugsweise zu einem in Abhängigkeit von jeweils herrschenden aerothermalen Bedingungen bestimmten Zeitpunkt. Bis zum Erreichen der vorgesehenen Erdumlaufbahn kann die Trägerrakete eine oder mehrere Stufen abwerfen (nicht dargestellt).

In Ausführungsformen, bei denen das Trägerraketensystem dazu eingerichtet ist, eine Nutzlastverkleidung im Flug abzulösen und mittels der Starthilfeeinheit zur Erdoberfläche zu transportieren, kann das Ablösen V/5 der Starthilfeeinheit auch nach Überschreiten der Schallgeschwindigkeit so weit hinausgezögert werden, dass es in einer Höhe erfolgt, in der die Nutzlastverkleidung entbehrlich ist.

Die Starthilfeeinheit fliegt nach dem Ablösen V/5 von der Trägerrakete zurück zur Erdoberfläche. Der Rückflug V/8-12 umfasst in der dargestellten Ausführungsform zunächst eine ballistische Phase V-8, danach eine Atmosphärenbremsung V-9 , ein anschließendes Fliegen V-10 einer Steilkurve zur Start- und Landebahn B hin, auf das ein Gleiten V-11 mit einem Anstieg zur Nutzung überschüssiger Geschwindigkeit und schließlich ein Absinken vorzugsweise im reinen Gleitflug V-12 folgt, ehe die Starhilfeeinheit auf der Start- und Landebahn B landet V-13.

Offenbart ist ein Trägerraketensystem 1 mit einer Trägerrakete 100 sowie mit einer Starthilfeeinheit 200, die mit der Trägerrakete 100 lösbar verbunden oder zu verbinden ist. Das Trägerraketensystem 1 ist dazu eingerichtet, bei einer Schuberzeugung durch mindestens ein Triebwerk 114 der Trägerrakete 100 mittels der Starthilfeeinheit 200 in einem Horizontalstart abzuheben. Dabei ist die Starthilfeeinheit 200 nach erreichter Überschallgeschwindigkeit von der weiterfliegenden Trägerrakete 100 lösbar sowie dazu eingerichtet, nach ihrer Ablösung V/5 von der Trägerrakete 100 zurück zur Erdoberfläche O zu fliegen. Die Starthilfeeinheit 200 bietet vorzugsweise alle erforderlichen strukturellen Unterstützungen, um für eine Trägerrakete 100, die für den Vertikalstart ausgelegt wurde, diese bzw. deren wesentliche Komponenten ohne strukturelle Änderungen nutzen zu können.

Offenbart sind weiterhin ein Abflugverfahren für ein Trägerraketensystem 1 sowie ein Herstellungsverfahren für ein Trägerraketensystem 1.

### Bezugszeichen

- 1: Trägerraketensystem

- 100: Trägerrakete
- 110: Hauptstufe
- 112a, 112b, 113a, 113b: Stufenabschnitt
- 112c, 113c: Tankabschnitt
- 114: Haupttriebwerk
- 120: Hauptstufe
- 121: Antriebstufe
- 122: Nutzlastverkleidung

- 200: Starthilfeeinheit
- 210a, 210b: Tragfläche
- 211a, 211b: Höhenruder
- 212a, 212b: Seitenstabilisator
- 213: luftatmendes Antriebssystem
- 213a, 213b: Triebwerk
- 220: Stützstruktur
- 220a, 220b: Wand
- 230: Start- und/oder Landevorrichtung

- 300: Fahreinrichtung

- B: Start- und Landebahn
- B₁, B₂: Booster
- L: Längsachse der Trägerrakete
- O: Erdoberfläche
- S: für einen vertikalen Start vorgesehene (VTO-) Stufenrakete
- T₁, T₂, T₁', T₂': Tank

### Verfahrensschritte:

- V/1: horizontales Starten
- V/2-4: Beschleunigen auf Überschallgeschwindigkeit
- V/2: abgeknickter Aufstieg
- V/3: weiter beschleunigtes Ansteigen
- V/4: Erhöhen des Steigungswinkels
- V/5: Ablösen der Starthilfeeinheit von der Trägerrakete
- V/6: weiteres Aufrichten der Trägerrakete
- V/6-7: Fortsetzung des Flugs der Trägerrakete ohne Starthilfeeinheit
- V/7: Weiterflug in eine Erdumlaufbahn/ Eintritt in ballistische Phase der Trägerrakete
- V/8: ballistische Phase der Starhilfeeinheit
- V/8-12: Rückflug der Starthilfeeinheit
- V/9: Atmosphärenbremsung
- V/10: Fliegen einer Steilkurve
- V/11: Gleiten mit Anstieg
- V/12: Absinken
- V/13: Landung

## Patentansprüche

1. Trägerraketensystem (1), das eine Trägerrakete (100) zum Transport mindestens einer Last sowie eine mit der Trägerrakete (100) lösbar verbundene oder zu verbindende Starthilfeeinheit (200) umfasst,
wobei das Trägerraketensystem (1) dazu eingerichtet ist, bei einer Schuberzeugung durch mindestens ein Triebwerk (114) der Trägerrakete (100) mittels der Starthilfeeinheit (200) in einem Horizontalstart abzuheben,
wobei die Starthilfeeinheit (200) nach erreichter Überschallgeschwindigkeit von der weiterfliegenden Trägerrakete (100) lösbar sowie dazu eingerichtet ist, nach ihrer Ablösung (V/5) von der Trägerrakete (100) zurück zur Erdoberfläche (O) zu fliegen.

2. Trägerraketensystem gemäß Anspruch 1, wobei die Trägerrakete (100) mindestens einen Stufenabschnitt (112a, 112b, 113a, 113b), mindestens ein Triebwerk (114), mindestens eine Nutzlastadapter und/oder mindestens eine Nutzlastverkleidung (122) umfasst, der/die dazu geeignet ist/sind, in einer für einen vertikalen Start vorgesehenen Stufenrakete (S) verwendet zu werden.

3. Trägerraketensystem gemäß Anspruch 2, wobei die Trägerrakete (100) zusätzlich eine, zwei oder mehr Tankabschnitt/e (112c, 113c) jeweils mit zumindest einem Teil mindestens eines Tanks (T₁, T₂) umfasst.

4. Trägerraketensystem gemäß einem der vorhergehenden Ansprüche, wobei die Starthilfeeinheit (200) eine Stützstruktur (220) zur Stabilisierung der Trägerrakete (100) umfasst.

5. Trägerraketensystem gemäß einem der vorhergehenden Ansprüche, das dazu eingerichtet ist, eine zum Schutz mindestens einer durch die Trägerrakete (100) jeweils transportierten Last vorgesehene Nutzlastverkleidung (122) im Flug abzulösen und mittels der Starthilfeeinheit (200) zur Erdoberfläche (O) zu transportieren.

6. Trägerraketensystem gemäß einem der vorhergehenden Ansprüche, wobei die Starthilfeeinheit (200)
- mindestens eine Start- und/oder Landevorrichtung (230) jeweils mit einem Rollsystem und/oder einem Schlittensystem umfasst;
- dazu eingerichtet ist, zum Beschleunigen des kombinierten Trägerraketensystems (1) am Boden lösbar mit einer Fahr- und/oder Schlitteneinrichtung (300) verbunden zu werden;
- ein elektronisches und/oder mechanisches Steuerungssystem zum Steuern des startenden und/oder fliegenden Trägerraketensystems (1) vor dem Ablösen der Starthilfeeinheit (200) umfasst;
- dazu eingerichtet ist, insbesondere im Segelflug zur Erdoberfläche zurück zu gleiten (V/11);
- mindestens ein luftatmendes Antriebssystem (213) zur Verstärkung des vom Triebwerk (114) der Trägerrakete (100) erzeugten Schubs im angekoppelten Zustand und/oder zum Antrieb der Starthilfeeinheit (200) nach ihrem Ablösen von der Trägerrakete (100) umfasst; und/oder
- eine oder mehrere Versorgungseinrichtung/en zum Versorgen der Trägerrakete (100) im angekoppelten Zustand mit Gas, elektrischem Strom und/oder hydraulischem Druck umfasst.

7. Trägerraketensystem gemäß einem der vorhergehenden Ansprüche, wobei die Starthilfeeinheit (200) eine veränderliche Flügelform aufweist.

8. Trägerrakete (100) für ein Trägerraketensystem (1) gemäß einem der vorhergehenden Ansprüche.

9. Abflugverfahren für ein Trägerraketensystem (1) mit einer als Mehrstufenrakete ausgebildeten Trägerrakete (100) und einer anfänglich mit dieser verbundenen Starthilfeeinheit (200), wobei das Abflugverfahren ein horizontales Starten (V/1) des Trägerraketensystems (1) mit Hilfe der Starthilfeeinheit (200), ein Beschleunigen (V/2-4) auf Überschallgeschwindigkeit, ein Ablösen (V/5) der Starthilfeeinheit von der weiterfliegenden Trägerrakete (100) nach Erreichen der Überschallgeschwindigkeit, ein Weiterfliegen (V/6-7) mindestens einer Stufe der Trägerrakete (100) in eine Erdumlaufbahn sowie ein Zurückfliegen (V/8-12) der Starthilfeeinheit (200) zur Erdoberfläche (O) umfasst.

10. Herstellungsverfahren zum Herstellen eines Trägerraketensystems (1) gemäß einem der vorhergehenden Ansprüche, das ein Fertigen der Trägerrakete (100) umfasst, bei dem mindestens ein Stufenabschnitt (112a, 112b, 113a, 113b), mindestens ein Triebwerk (114), mindestens eine Nutzlastadapter und/oder mindestens eine Nutzlastverkleidung (122) verbaut werden, der/die zur Verwendung in einer für einen vertikalen Start vorgesehenen Stufenrakete (S) geeignet sind.
